# EUROPÄISCHE PATENTSCHRIFT

(11) **EP 2 295 186 B1**
(45) Veröffentlichungstag und Bekanntmachung des Hinweises auf die Patenterteilung: **24.01.2018**
(21) Anmeldenummer: 10008947.3
(22) Anmeldetag: 27.08.2010
(51) Int. Cl.: B23K 9/32, B23K 10/00, B23K 37/00, B23K 26/14, F16K 11/22, F16K 27/00

(54) **Schutzgasschweiß-Steuerungsvorrichtung**
Protective gas welding control device
Dispositif de commande de soudure à gaz protecteur

(30) Priorität: 09.09.2009 DE 202009012211 U
(43) Veröffentlichungstag der Anmeldung: 16.03.2011
(73) Patentinhaber: Bürkert Werke GmbH, 74653 Ingelfingen (DE)
(72) Erfinder: Lotha, Hartmuth, 74635 Kupferzell (DE)
(74) Vertreter: Prinz & Partner mbB

(56) Entgegenhaltungen:
- WO-A1-96/33040
- WO-A1-2008/048395
- WO-A2-2008/051829
- DE-B3-102008 057 415
- US-A- 5 290 995
- US-A- 5 304 776
- US-B1- 6 232 575
- US-B1- 6 288 362
- Asco: "Pneumatic Proportional Technology SENTRONIC Pneumatic Proportional Valves SENTRONIC Pneumatic Proportional Valves with Bus interface PULSTRONIC Pneumatic Proportional Valves SERVOTRONIC Pneumatic Solenoid Operated Servovalves PIEZOTRONIC Subbase Mounted Pneumatic Proportional Valves SENTRONIC Pneuma", , 31 December 2000 (2000-12-31), XP055341484, Retrieved from the Internet: URL:https://www.ascovalvenet.com/pdf/liter aturerequest/proportional.pdf [retrieved on 2017-02-02]
- Anonymous: "Pneumatikventile - Timmer GmbH", , 2 February 2017 (2017-02-02), XP055341501, Retrieved from the Internet: URL:http://www.timmer-pneumatik.de/pneumat ikventile.html [retrieved on 2017-02-02]
- Anonymous: "Ventile - FestoWiki", , 3 February 2017 (2017-02-03), XP055341951, Retrieved from the Internet: URL:https://www.festo.com/wiki/de/Ventile [retrieved on 2017-02-03]

## Beschreibung

Die Erfindung betrifft eine Schutzgasschweiß-Steuerungsvorrichtung für Schweißroboter.

Schweißroboter sind hochkomplexe Maschinen, bei denen eine Vielzahl von unterschiedlichen Technologien zusammen in einer Anlage nebeneinander angewendet wird. Schweißroboter arbeiten beispielsweise nach dem Widerstands-, Laser- oder Plasmaschweißverfahren. Die Schweißqualität soll auf höchstem Niveau und vor allem gleichbleibend sein. Diese Qualitätsanforderung ist nicht immer einfach einzuhalten, da sie von unterschiedlichen Prozessparametern abhängig ist, zum Beispiel der Drahtfördereinrichtung, die die Schweißdrahtfördergeschwindigkeit bestimmt, dem Kühlwassersystem, das die Kühlwasserdurchflussmenge als auch die Kühlwassertemperatur einstellt bzw. in die Steuerung mit einzubeziehen ist, dem Brennersystem, das den Anteil an Schutzgas/Brenngas mischt und deren Durchflussmenge bestimmt, sowie eine Einrichtung zur Steuerung des Spülgases, üblicherweise Druckluft. Die einzelnen Einheiten und Systeme werden von verschiedenen Zulieferern bereitgestellt und dann vor Ort eingestellt.

Die US 5 290 995, die dem Oberbegriff des Anspruchs 1 zugrundeliegt, zeigt ein System zum Plasmalichtbogenschweißen. Sie offenbart einen Armaturenkasten nahe des Schweißbrenners mit Leitungen für ein Schneidgas, ein Startgas und Kühlwasser, die jeweils mit einem Ventil unterbrochen werden können.

Die US 5 304 776 A offenbart eine Vorrichtung zum automatisierten Schweißen von Rohren unter einer Argonatmosphäre. Dabei wird der Argonfluss durch einen Massendurchflussregler gesteuert.

Die Erfindung schafft eine Schutzgasschweiß-Steuerungsvorrichtung für Schweißroboter gemäß Anspruch 1, die einfacher aufgebaut ist als bislang übliche und vor allem kostengünstiger ist.

Die Fluideinheit vermeidet die bisherigen Nachteile, gemäß denen für das Kühlwassersystem, das Brennersystem und das Spülgassystem eigene Ventile und Sensoren getrennt geliefert und vor Ort zusammengebaut werden. Die Fluideinheit ist ein komplett vorgefertigtes System, das es auch erlaubt, eine Voreinstellung der einzelnen Ventile vorzunehmen, sodass das Fluidsystem nur noch eine geringe Nachjustage im Werk, in dem geschweißt wird, erfordert. Darüber hinaus lässt sich die Fluideinheit räumlich, im Gegensatz zu der Stromsteuerung, die immer außerhalb des Schutzzaunes positioniert ist, von dieser getrennt positionieren, insbesondere näher zum Roboter rücken als bislang.

Die Verwendung eines Massendurchflussreglers für die Schutzgasdosierung ist besonders vorteilhaft, denn bei einem parallelen Betrieb von mehreren Schweißrobotern kann es bei einem auftretenden Druckabfall zu einer ungenügenden Schutzgaszufuhr kommen. Um dies zu verhindern, ist im Stand der Technik vorgesehen, dass im gesamten Schutzgaszufuhrleitungssystem stets eine Zusatz- oder Reserveschutzgasmenge zur Verfügung steht, die den Druckabfall kompensieren kann. Da Schutzgas äußerst teuer ist, können jetzt unnötige Gasverluste und Kosten vermieden werden. Der Massendurchflussregler kann nämlich bei einem Druckabfall sehr schnell automatisch die zugeführte Schutzgasmenge nachregeln, sodass das zusätzlich vorhandene Reserveschutzgasvolumen reduziert werden kann. Aufgrund der Reglergeschwindigkeit sind die geforderten Durchflusswerte und Drücke schneller erreichbar als in bekannten Systemen.

Zudem ist die Ausführung für den Servicefall von großem Vorteil, denn im Servicefall werden die Regler einfach und schnell ausgetauscht.

Das bzw. die Module sind am Fluidkanalblock lösbar und austauschbar angebrachte Elemente, das heißt sozusagen in sich geschlossene, mit eigenem Außengehäuse ausgeführte Elemente. Auch dies vereinfacht die Herstellung, Montage und Reparatur der Steuerungsvorrichtung.

Die Fluideinheit hat vorzugsweise einen gemeinsamen Träger für alle Ventile.

Dieser Träger kann beispielsweise der gemeinsame Fluidkanalblock sein, der mit Durchströmkanälen für das Schutzgas, das Kühlwasser und das Spülgas durchzogen ist. An diesem Fluidkanalblock werden dann die Ventile, Sensoren etc. angebracht, die für die Steuerung des Fluids notwendig sind, sodass sich insgesamt eine kompakte Einheit einstellt.

Am Fluidkanalblock können optional auch ein dem Schutzgaskanal zugeordnetes Rückschlagventil und/oder ein dem Kühlwasserkanal zugeordnetes Rückschlagventil angebracht sein. Auch hier gilt: Durch die Anbringung der Ventile und beweglichen Teile zur Steuerung der Fluidströme an der Fluideinheit ist die Montage vor Ort reduziert, und vor allem kann die gesamte Fluidsteuerung als ein einziges Zukaufteil ausgeführt sein. Im Werk selbst verbleibt dann lediglich die Montage der Anschlussschläuche.

Alternativ hierzu kann der Kühlwasserdurchflussregler auch als mehrmoduliges System ausgeführt sein, mit einem Kühlwasserdurchflussventil und einem Durchflusssensor, die jeweils eigene, voneinander getrennte Module darstellen.

Die Steuerungsvorrichtung sollte darüber hinaus auch Temperatursensoren zum Erfassen der zu- und abströmenden Kühlwassertemperatur aufweisen. Diese Sensoren können, optional, als separate Elemente am Fluidkanalblock lösbar angebracht sein. Alternativ hierzu sind sie auch in einem Durchflusssensor integrierbar. Über die erfassbare Temperaturdifferenz lässt sich der Bedarf an Kühlwasser exakt bestimmen.

Ferner kann die Steuerungsvorrichtung einen Schutzgasüberwachungssensor und/oder einen Druckregler für Schutzgas aufweisen. Auch diese Systemkomponenten sollten als separate, eigene Einheiten am Träger bzw. am Fluidkanalblock lösbar angebracht sein.

Die Steuerung des gesamten Fluidmoduls lässt sich besonders vorteilhaft über ein Can-Bus-System verwirklichen.

Dabei könnte die Steuerungsvorrichtung eine Can-Bus-Anschlussschnittstelle für die Schutzgas-, Kühlwasser- und Spülgassteuerung aufweisen.

Die bevorzugte Ausführungsform sieht vor, dass die Schutzgasschweiß-Steuerungsvorrichtung am Roboter, vorzugsweise am oder im Robotersockel oder am Roboterfußfuß angebracht ist. Dies hat besondere Vorteile. Bei der bisherigen Unterbringung der einzelnen Durchflussventile für die Fluidsteuerung wurden diese zumeist weit entfernt vom Roboter positioniert. Aufgrund der langen Leitungsführung bis zur Schweißstelle kommt es zwangsläufig zu langen Ansprechzeiten. Dies kann dadurch vermieden werden, dass die Ventile für die Steuerung der Fluide möglichst nah am Roboter positioniert sind, vorzugsweise an diesem selbst.

Es ist aber auch möglich, die Vorrichtung nicht nur am Roboterfuß/Robotersockel, sondern an einer der Roboterachsen anzubringen, um noch kürzere Schlauchlängen zum Schweißwerkzeug zu verwirklichen.

Da die Einstellungen der einzelnen Fluidkomponenten sehr aufwendig sind, ist es für die Inbetriebnahme besonders vorteilhaft, wenn das Schutzgasdurchströmventil und das Kühlwasserdurchströmventil vor dem Anschluss von Leitungen für Schutzgas, Kühlwasser und Luft bereits auf eine vorgegebene Durchflussrate voreingestellt sind. Das bedeutet, die erfindungsgemäße Vorrichtung ist ab Werk voreingestellt bezüglich der Durchflussraten von Schutzgas und Kühlwasser.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Schweißroboter mit angeschlossener erfindungsgemäßer Steuerungsvorrichtung.
- Figur 2 die erfindungsgemäße Schutzgasschweiß-Steuerungsvorrichtung dargestellt mit Fluidschaltsymbolen,
- Figur 3 eine geringfügig modifizierte Ausführungsform der erfindungsgemäßen Steuerungsvorrichtung, und
- Figur 4 eine perspektivische Ansicht der erfindungsgemäßen Steuerungsvorrichtung.

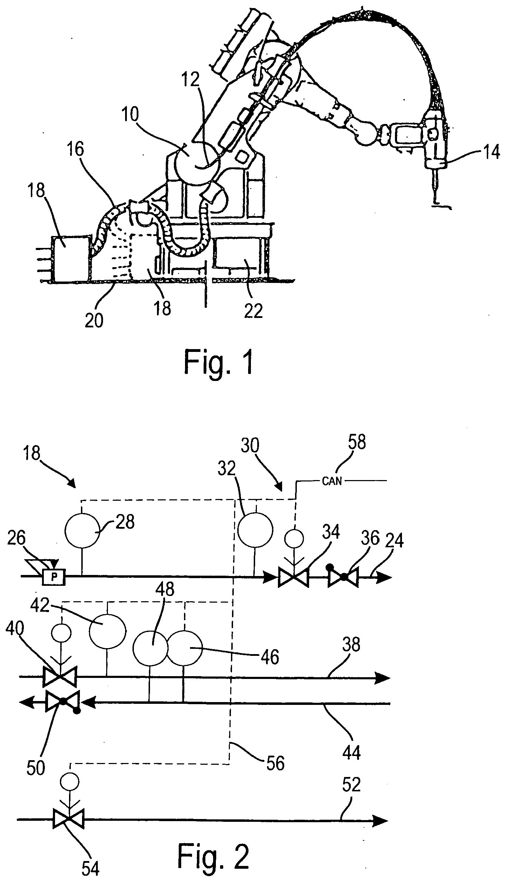

In Figur 1 ist ein Schweißroboter 10 gezeigt, der Schutzgasschweißungen vornimmt. Mit dem Bezugszeichen 12 ist der zugeführte Schweißdraht bezeichnet, das entsprechende Schweißwerkzeug trägt das Bezugszeichen 14. Im Werkzeug 14 wird um den Auslass für den Schweißdraht 12 herum Schutzgas abgegeben, welches üblicherweise ein Gemisch aus Schutzgas und Brenngas ist. Darüber hinaus wird dem Werkzeug 14 Kühlwasser sowie Spülluft zugeführt.

Die Verrohrung für Schutzgas, Spülgas und Kühlwasser wird über Schläuche erzielt, die üblicherweise in einem flexiblen Kanal 16 zusammengefasst sind. Die Schläuche und der Kanal 16 enden in einer Schutzgasschweiß-Steuerungsvorrichtung 18.

Diese Schutzgasschweiß-Steuerungsvorrichtung 18 ist bevorzugterweise unmittelbar am Roboterfuß 20 angebracht. Der Roboterfuß 20 hat eine Platte, die seitlich über den Robotersockel 22 hinaussteht und auf der die Steuerungsvorrichtung 18 befestigt ist. Alternativ kann die Steuerungsvorrichtung 18 auch am oder im Sockel untergebracht sein, wie mit unterbrochenen Linien gezeigt.

Wie in Figur 1 zu erkennen ist, ist durch die roboternahe Positionierung der Steuerungsvorrichtung am Roboter 10 selbst eine sehr kurze Schlauchlänge für die jeweiligen Fluide vorhanden.

In Figur 2 ist die Schutzgasschweiß-Steuerungsvorrichtung 18 als Schaltbild wiedergegeben.

In der Schutzgasleitung 24 sind in der Steuerungsvorrichtung ein Druckregler in Form eines Druckminderers 26, ein Schutzgasüberwachungssensor 28 und ein Schutzgasdurchflussregler 30, hier ein Schutzgasmassendurchflussregler, mit einem Massendurchflusssensor 32 und einem steuerbaren Schutzgasdurchflussventil 34 angeordnet. Nach dem Durchflussregler 30 ist ein Rückschlagventil 36 vorgesehen.

In der Zuflussleitung 38 für Kühlwasser sind ein Kühlwasserdurchflussventil 40, das steuerbar ist, und ein Temperatursensor 42 angeordnet.

In der Rückströmleitung 44 für Kühlwasser sitzen ein Kühlwasserdurchflusssensor 46 (gegebenenfalls als Massendurchflußsensor ausgebildet) sowie ein Temperatursensor 48. Der Kühlwasserdurchflusssensor 46 könnte aber auch in der Zuströmleitung 38 positioniert sein.

Darüber hinaus ist ein Rückschlagventil 50 in der Kühlwasserrückströmleitung 44 angeordnet.

Die Spülgasleitung 52 umfasst vorzugsweise lediglich ein steuerbares Pneumatikventil 54, das entweder nur als Ein-Aus-Ventil ausgeführt ist oder auch als Proportionalventil, um die Durchflussmenge an Spülgas (vorzugsweise Spülluft) zu steuern. Alternativ hierzu kann das Pneumatikventil 54 auch als Spülgasdurchflussregler ausgeführt sein, mit einem Durchflusssensor und einem Ventil.

Sämtliche steuerbaren Ventile 34, 40, 54 sowie die Durchfluss- und Temperatursensoren sowie die Drucksensoren 32, 46, 42, 48 bzw. 28 und der Druckminderer 26 sind über Datenleitungen 56 ansteuerbar bzw. liefern über die entsprechenden Leitungen Daten an eine Steuerung. Die Steuerung ist vorzugsweise außerhalb der Steuerungsvorrichtung angeordnet ist, nämlich in einem Schaltschrank, welcher außerhalb des üblicherweise vorgesehenen Schutzzaunes um den Roboter steht. Die Verbindung erfolgt über ein Can-Bus-System 58.

Das steuerbare Kühlwasserdurchflussventil 40 kann auch als Massendurchflussregler ausgeführt sein, ähnlich wie dies für das Schutzgas beschrieben ist.

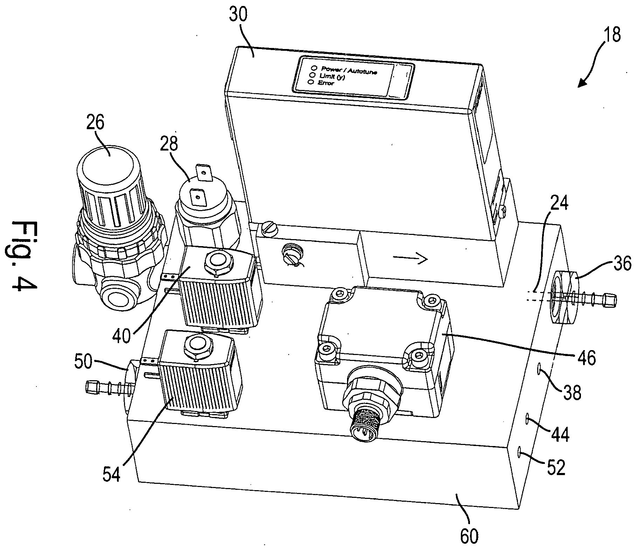

Sämtliche in Figur 2 gezeigten Einheiten sind auf einem gemeinsamen Träger positioniert, der später in Zusammenhang mit Figur 4 noch näher erläutert wird.

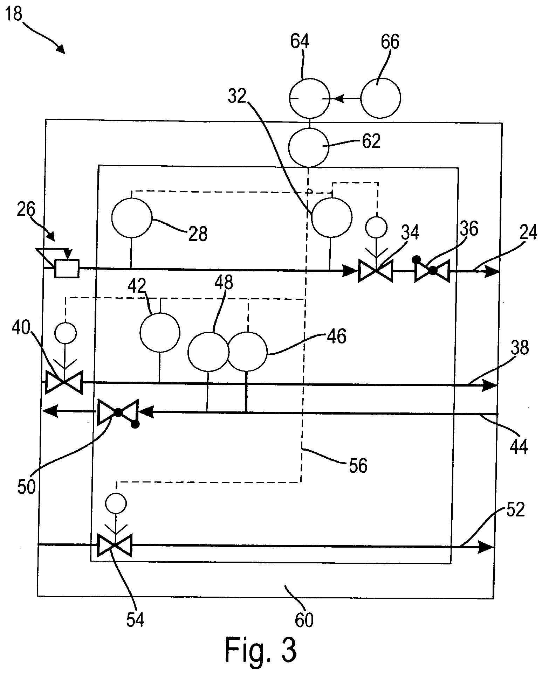

Die Ausführungsform nach Figur 3 entspricht im Wesentlichen der nach Figur 2, sodass im Folgenden nur noch auf die Unterschiede eingegangen werden muss und die bereits eingeführten Bezugszeichen für gleiche oder funktionsgleiche Teile übernommen werden.

Bei dieser Ausführungsform sitzt auf dem gemeinsamen Träger 60, der zuvor bereits erwähnt wurde, ein Mikrocontroller 62, welcher mit einem Can-/Multipol-System mit einem kundenseitigen Rechner 64 verbunden ist. Eine entsprechende Schnittstelle ist beispielsweise an der Schutzgasschweiß-Steuerungsvorrichtung, wie sie in Figur 3 gezeigt ist, vorhanden.

Es gibt sogenannte kundenseitige Freischaltbedingungen, die in der kundenseitigen Steuerung 64 abgefragt werden. Diese Freischaltbedingungen werden als Input mit dem Bezugszeichen 66 symbolisiert. Zu diesen Freischaltbedingungen gehören als Start- und Betriebsvoraussetzungen zum Beispiel das Vorhandensein einer ausreichenden Schutzgasmenge mit einem Minimaldruck, das ausreichende Vorhandensein von Kühlwasser mit einer entsprechenden Temperatur und das Vorhandensein von Spülluft.

Natürlich kann es auch andere Freischaltbedingungen geben wie Schutzgitter geschlossen, Stromzufuhr aktiviert etc.

Die in den Figuren 2 bis 4 gezeigte Steuerungsvorrichtung ist als Fluideinheit ausgeführt, indem sämtliche zuvor genannten Ventile, insbesondere das Schutzgasdurchflussventil 34, das Kühlwasserdurchflussventil 40 und das Pneumatikventil 54 zu einer austauschbaren, gemeinsamen baulichen Einheit zusammengefasst sind. Diese Einheiten sind alle modular austauschbar.

Zusatzvolumen für Schutzgas kann stark reduziert werden oder komplett entfallen, denn bei Druckabfall kann automatisch und sehr schnell nachgeregelt werden. Dies ist durch die hohe Reglergeschwindigkeit und die nahe Anordnung der Steuervorrichtung 18 am Werkzeug 14 und den oder die schnell nachregelnden Durch- oder Massendurchflussregler möglich.

Die Durchflussraten von Schutzgas und Kühlwasser oder auch von Spülgas können voreingestellt sein, sodass bei der Inbetriebnahme nur noch wenige zusätzliche Parameter eingestellt werden müssen.

In Figur 4 sind die bauliche Kompaktheit und der modulare Aufbau sehr gut zu sehen. Die gebildete Fluideinheit ist durch einen Träger 60 in Form eines Fluidkanalblocks realisiert. Dieser Fluidkanalblock hat Durchströmkanäle für die Leitungen 24, 38, 44 und 52. Das bedeutet, die Leitungen sind teilweise durch die Kanäle im Inneren des Fluidkanalblocks und teilweise durch unmittelbar angeschlossene Schlauchleitungen gebildet.

Für die Schutzgaszuführung sind jeweils als separate, austauschbare, vorgefertigte Einheiten ausgeführte Elemente in Form des Druckreglers 26, eines Schutzgasüberwachungssensors 28 sowie des Schutzgasdurchflussreglers 30 vorgesehen. Diese baulich austauschbaren, am Fluidkanalblock angebrachten Elemente bilden Einzelmodule. Am Fluidkanalblock, zum Beispiel an dessen Stirnseite, ist auch noch das Rückschlagventil 36 vorgesehen.

Die Zuströmleitung 38 für Kühlwasser hat im Fluidkanalblock einen Kanal, an den das Kühlwasserdurchflussventil 40 angeschlossen ist. Der ebenfalls als separates Element ausgebildete Durchflusssensor 46 ist ebenfalls von oben einfach auf den Fluidkanalblock aufgesetzt und daran befestigt.

Die Temperatursensoren 42, 48 können von oben oder unten an die entsprechenden Kanäle angekoppelt sein oder in eines der vorgenannten Elemente integriert werden.

Das Rückschlagventil 50 kann beispielsweise stirnseitig an dem Fluidkanalblock angebracht werden und, wie das Rückschlagventil 36, optional einen Fortsatz zum Aufschieben eines Schlauches besitzen.

Für die Spülluft ist das Pneumatikventil 54 vorgesehen, das ebenfalls von oben am Fluidkanalblock angebracht ist und mit dem entsprechenden Spülluftkanal gekoppelt wird.

Die gesamte Steuerungsvorrichtung für die komplette Fluidik ist somit kompakt und vormontiert, modular mit Einzelelementen aufgebaut und von der Elektrik, das heißt der Stromzufuhr zum Roboter oder zum Werkzeug 14, getrennt.

Bezüglich des Kanalsystems für das Schutzgas ist zu betonen, dass es hier natürlich einen einkanaligen oder einen mehrkanaligen Aufbau geben kann, wobei die Vermischung des Brenngases und des Schutzgases auf dem Weg zum Werkzeug 14 erfolgen kann oder im oder vor der Steuerungsvorrichtung 18.

## Patentansprüche

1. Schutzgasschweiß-Steuerungsvorrichtung, die als Fluideinheit ausgeführt ist, mit einem steuerbaren Schutzgasdurchflussventil (34) zur Steuerung der Schutzgasmenge, einem steuerbaren Kühlwasserdurchflussventil (40) zur Steuerung der Kühlwassermenge und einem steuerbaren Pneumatikventil (54) zur Steuerung einer Spülluftströmung,
wobei die Ventile in der austauschbaren, gemeinsamen Fluideinheit zusammengefasst sind und in der Fluideinheit keine Schweißstrom- oder Roboterstromsteuergeräte angebracht sind, **gekennzeichnet durch**
einen Schutzgasdurchflussregler (30) in Form eines Schutzgasmassendurchflussreglers, wobei das Schutzgasdurchflussventil (34) Teil des Schutzgasdurchflussreglers (30) ist, und/oder
einen Kühlwasserdurchflussregler in Form eines Kühlwassermassendurchflussreglers, wobei das Kühlwasserdurchflussventil (40) Teil des Kühlwasserdurchflussreglers ist, und/oder
einen Spülgasdurchflussregler in Form eines Spülgasmassendurchflussreglers, wobei das Pneumatikventil (54) Teil des Spülgasdurchflussreglers ist,
wobei die Schutzgasschweiß-Steuerungsvorrichtung einen gemeinsamen Fluidkanalblock mit Durchströmkanälen für das Schutzgas, das Kühlwasser und das Spülgas aufweist, wobei der Schutzgasdurchflussregler (30) und/oder der Kühlwasserdurchflussregler und/oder der Spülgasdurchflussregler jeweils als eigenes, vom Fluidkanalblock lösbares Modul ausgebildet ist und wobei das Modul bzw. die Module am Fluidkanalblock lösbar und austauschbar angebrachte, vorgefertigte Elemente sind.

2. Schutzgasschweiß-Steuerungsvorrichtung nach Anspruch 1, **dadurch gekennzeichnet, dass** die Fluideinheit einen gemeinsamen Träger (60) für die Ventile hat.

3. Schutzgasschweiß-Steuerungsvorrichtung nach Anspruch 1 oder 2, **dadurch gekennzeichnet, dass** am Fluidkanalblock ein dem Schutzgaskanal zugeordnetes Rückschlagventil (36) und/oder ein dem Kühlwasserkanal zugeordnetes Rückschlagventil (50) angebracht ist.

4. Schutzgasschweiß-Steuerungsvorrichtung nach einem der vorhergehenden Ansprüche, **dadurch gekennzeichnet, dass** der Kühlwasserdurchflussregler das Kühlwasserdurchflussventil (40) und einen Durchflusssensor (46) umfasst, die jeweils als eigene, voneinander getrennte Module ausgebildet sind.

5. Schutzgasschweiß-Steuerungsvorrichtung nach einem der vorhergehenden Ansprüche, **dadurch gekennzeichnet, dass** die Vorrichtung Temperatursensoren (42, 48) zum Erfassen der zu- und abströmenden Kühlwassertemperatur aufweist, die, vorzugsweise, als separate, vorgefertigte Elemente am Fluidkanalblock lösbar angebracht sind.

6. Schutzgasschweiß-Steuerungsvorrichtung nach einem der vorhergehenden Ansprüche, **dadurch gekennzeichnet, dass** die Vorrichtung einen Schutzgasüberwachungssensor (28) und/oder einen Druckregler (26) für Schutzgas aufweist.

7. Schutzgasschweiß-Steuerungsvorrichtung nach einem der vorhergehenden Ansprüche, **dadurch gekennzeichnet, dass** die Vorrichtung über ein Can-Bus-System gesteuert wird.

8. Schutzgasschweiß-Steuerungsvorrichtung nach Anspruch 7, **dadurch gekennzeichnet, dass** die Vorrichtung eine Can-Bus-Anschlussschnittstelle für die Schutzgas-, Kühlwasser- und Spülgassteuerung aufweist.

9. Schutzgasschweiß-Steuerungsvorrichtung nach einem der vorhergehenden Ansprüche, **dadurch gekennzeichnet, dass** die Vorrichtung am Roboter, insbesondere am Roboterfuß angebracht ist.

10. Schutzgasschweiß-Steuerungsvorrichtung nach einem der vorhergehenden Ansprüche, **dadurch gekennzeichnet, dass** das Schutzgasdurchflussventil und das Kühlwasserdurchflussventil vor dem Anschluss von Leitungen für Schutzgas und Kühlwasser auf eine vorgegebene Durchflussrate von Schutzgas bzw. Kühlwasser voreingestellt sind

## Claims

1. A protective gas welding control device which is configured as fluid unit, comprising a controllable protective gas flow valve (34) for controlling the amount of protective gas, a controllable cooling water flow valve (40) for controlling the amount of cooling water, and a controllable pneumatic valve (54) for controlling a scavenging air flow,
wherein the valves are combined in the exchangeable, common fluid unit and in the fluid unit no welding current or robot current control devices are mounted, **characterized by**
a protective gas flow regulator (30) in the form of a protective gas mass flow regulator, wherein the protective gas flow valve (34) is part of the protective gas flow regulator (30), and/or
a cooling water flow regulator in the form of a cooling water mass flow regulator, wherein the cooling water flow valve (40) is part of the cooling water flow regulator, and/or
a scavenging gas flow regulator in the form of a scavenging gas mass flow regulator, wherein the pneumatic valve (54) is part of the scavenging gas flow regulator,
wherein the protective gas welding control device includes a common fluid channel block with flow channels for the protective gas, the cooling water and the scavenging gas, wherein the protective gas flow regulator (30) and/or the cooling water flow regulator and/or the scavenging gas flow regulator each is formed as separate module releasable from the fluid channel block and wherein the module or the modules is/are prefabricated elements releasably and exchangeably mounted on the fluid channel block.

2. The protective gas welding control device according to claim 1, **characterized in that** the fluid unit has a common carrier (60) for the valves.

3. The protective gas welding control device according to claim 1 or 2, **characterized in that** on the fluid channel block a check valve (36) associated to the protective gas channel and/or a check valve (50) associated to the cooling water channel is mounted.

4. The protective gas welding control device according to any of the preceding claims, **characterized in that** the cooling water flow regulator comprises the cooling water flow valve (40) and a flow sensor (46), which each are formed as modules separate from each other.

5. The protective gas welding control device according to any of the preceding claims, **characterized in that** the device includes temperature sensors (42, 48) for detecting the in- and outflowing cooling water temperature, which, preferably, are releasably mounted on the fluid channel block as separate, prefabricated elements.

6. The protective gas welding control device according to any of the preceding claims, **characterized in that** the device includes a protective gas monitoring sensor (28) and/or a pressure regulator (26) for protective gas.

7. The protective gas welding control device according to any of the preceding claims, **characterized in that** the device is controlled via a CAN bus system.

8. The protective gas welding control device according to claim 7, **characterized in that** the device includes a CAN bus connection interface for the protective gas, cooling water and scavenging gas control.

9. The protective gas welding control device according to any of the preceding claims, **characterized in that** the device is mounted on the robot, in particular on the robot base.

10. The protective gas welding control device according to any of the preceding claims, **characterized in that** before the connection of lines for protective gas and cooling water the protective gas flow valve and the cooling water flow valve are preset to a specified flow rate of protective gas and cooling water, respectively.

## Revendications

1. Dispositif de commande de soudage à l'arc sous protection gazeuse, lequel est réalisé sous forme d'unité fluidique, comportant une valve d'écoulement de gaz protecteur (34) qui est apte à être commandée, pour la commande de la quantité de gaz protecteur, une valve d'écoulement d'eau de refroidissement (40) qui est apte à être commandée, pour la commande de la quantité d'eau de refroidissement, et une valve pneumatique (54) qui est apte à être commandée, pour la commande d'un flux d'air de balayage,
les valves étant réunies dans l'unité fluidique commune échangeable, et aucun appareil de commande de courant de soudage ou de courant de robot n'étant monté dans l'unité fluidique, **caractérisé par**
un régulateur d'écoulement de gaz protecteur (30) sous forme de régulateur d'écoulement massique de gaz protecteur, la valve d'écoulement de gaz protecteur (34) faisant partie du régulateur d'écoulement de gaz protecteur (30), et/ou
un régulateur d'écoulement d'eau de refroidissement sous forme de régulateur d'écoulement massique d'eau de refroidissement, la valve d'écoulement d'eau de refroidissement (40) faisant partie du régulateur d'écoulement d'eau de refroidissement, et/ou
un régulateur d'écoulement de gaz de balayage sous forme de régulateur d'écoulement massique de gaz de balayage, la valve pneumatique (54) faisant partie du régulateur d'écoulement de gaz de balayage,
le dispositif de commande de soudage à l'arc sous protection gazeuse comportant un bloc de canaux fluidiques commun qui présente des canaux de passage pour le gaz protecteur, l'eau de refroidissement et le gaz de balayage, le régulateur d'écoulement de gaz protecteur (30) et/ou le régulateur d'écoulement d'eau de refroidissement et/ou le régulateur d'écoulement de gaz de balayage étant chacun réalisé sous forme de module particulier apte à être détaché du bloc de canaux fluidiques, et le module ou les modules étant des éléments préfabriqués montés de manière détachable et échangeable sur le bloc de canaux fluidiques.

2. Dispositif de commande de soudage à l'arc sous protection gazeuse selon la revendication 1, **caractérisé en ce que** l'unité fluidique présente un support commun (60) pour les valves.

3. Dispositif de commande de soudage à l'arc sous protection gazeuse selon la revendication 1 ou 2, **caractérisé en ce qu'**une soupape de retenue (36) associée au canal de gaz protecteur et/ou une soupape de retenue (50) associée au canal d'eau de refroidissement est/sont montée(s) sur le bloc de canaux fluidiques.

4. Dispositif de commande de soudage à l'arc sous protection gazeuse selon l'une des revendications précédentes, **caractérisé en ce que** le régulateur d'écoulement d'eau de refroidissement comprend la valve d'écoulement d'eau de refroidissement (40) et un capteur d'écoulement (46) qui sont chacun réalisé sous forme de modules particuliers distincts l'un de l'autre.

5. Dispositif de commande de soudage à l'arc sous protection gazeuse selon l'une des revendications précédentes, **caractérisé en ce que** le dispositif présente des capteurs de température (42, 48) pour la saisie de la température de l'eau de refroidissement d'arrivée et de sortie, lesquels sont de préférence montés de manière détachable sur le bloc de canaux fluidiques sous forme d'éléments préfabriqués séparés.

6. Dispositif de commande de soudage à l'arc sous protection gazeuse selon l'une des revendications précédentes, **caractérisé en ce que** le dispositif présente un capteur de surveillance de gaz protecteur (28) et/ou un régulateur de pression (26) pour du gaz protecteur.

7. Dispositif de commande de soudage à l'arc sous protection gazeuse selon l'une des revendications précédentes, **caractérisé en ce que** le dispositif est commandé par un système de bus can.

8. Dispositif de commande de soudage à l'arc sous protection gazeuse selon la revendication 7, **caractérisé en ce que** le dispositif présente une interface de raccordement de bus can pour la commande du gaz protecteur, de l'eau de refroidissement et du gaz de balayage.

9. Dispositif de commande de soudage à l'arc sous protection gazeuse selon l'une des revendications précédentes, **caractérisé en ce que** le dispositif est monté sur le robot, en particulier sur le pied du robot.

10. Dispositif de commande de soudage à l'arc sous protection gazeuse selon l'une des revendications précédentes, **caractérisé en ce que** la valve d'écoulement de gaz protecteur et la valve d'écoulement d'eau de refroidissement sont préréglées à une vitesse d'écoulement de gaz protecteur ou d'eau de refroidissement prédéterminée en amont du raccordement de conduites pour du gaz protecteur et de l'eau de refroidissement.
